# FASCICULE DE BREVET EUROPEEN

(11) **EP 0 461 977 B1**
(45) Date de publication et mention de la délivrance du brevet: **14.08.1996**
(21) Numéro de dépôt: 91401517.7
(22) Date de dépôt: 10.06.1991
(51) Int. Cl.: C07F 9/165, C08F 230/02

(54) **Dérivés acrylates et méthacrylates d'acides thiophosphoriques, procédé de préparation et polymères les contenant**
Acrylat- und Methacrylatderivate von Thiophosphorsäureestern, Verfahren zur Herstellung und sie enthaltende Polymere
Thiophosphoric acid esters of acrylates and methacrylates, process for preparation and polymers containing them

(30) Priorité: 14.06.1990 FR 9007439
(43) Date de publication de la demande: 18.12.1991
(73) Titulaire: ELF ATOCHEM S.A., F-92800 Puteaux (FR)
(72) Inventeur: Cerf, Martine, F-57000 Metz (FR); Mieloszynski, Jean-Luc, F-57158 Montigny les Metz (FR); Paquer, Daniel, F-54500 Vandoeuvre (FR)

(56) Documents cités:
- DE-A- 2 724 243
- GB-A- 2 003 883

## Description

La présente invention se rapporte à de nouveaux acrylates et méthacrylates comprenant au moins un atome de phosphore et au moins deux atomes de soufre, à un procédé pour leur fabrication, à l'obtention de nouveaux polymères et copolymères à partir desdits acrylates et méthacrylates.

On connaît déjà dans la littérature scientifique et industrielle de nombreux composés acryliques et méthacryliques porteurs de fonctions telles que halogène, hydroxyle, thiol et époxyde. Chacune de ces familles de composés a déjà trouvé dans différentes industries, en raison de la facilité de polymérisation de la double liaison acrylique, des applications variées. On connaît aussi, par GB-A-2 003 883, des esters organo-phosphorés comme insecticides comportant le radical CH₂=CB₂-CO- ainsi que le groupment 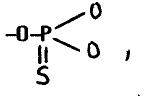 et par DE-A-2 724 243, des composés organiques du phosphore à teneur en halogène, comme agents inhibiteurs de flamme. Jusqu'à ce jour toutefois, la littérature scientifique et industrielle n'a pas donné d'exemples de composés acryliques et méthacryliques porteurs simultanément d'un atome de phosphore et de deux atomes de soufre, dans le groupement 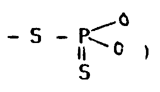 et d'un radical OH ou SH. En raison des particularités de comportement chimique que l'on peut attendre de la présence de tels atomes dans un composé acrylique ou méthacrylique destiné à être (co)polymérisé, le but visé par la présente invention consiste donc à explorer ce nouveau domaine de la chimie et à déterminer les conditions de synthèse de tels composés.

Un premier objet de la présente invention concerne donc des composés acryliques et méthacryliques choisis parmi ceux de formule : 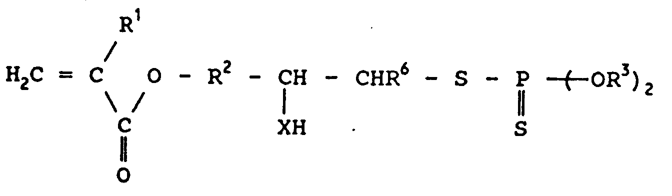 et ceux de formule : 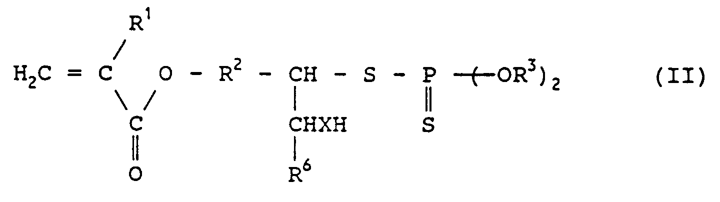 formules dans lesquelles :
- R¹ est choisi parmi l'atome d'hydrogène et le radical méthyle,
- X est un hétéroatome choisi parmi l'oxygène et le soufre,
- R² est choisi parmi les groupes alkylènes linéaires ou ramifiés, cycloalkylènes et hétérocycloalkylènes mono- ou polycycliques, alkylarylènes et arylalkylènes comprenant de 1 à 12 atomes de carbone,
- R⁶ est choisi parmi l'atome d'hydrogène et les radicaux alkyles et aryles ayant de 1 à 12 atomes de carbone, et
- R³ est choisi parmi les radicaux alkyles et aryles ayant de 1 à 20 atomes de carbone, les groupes -(CH₂)ₚSR⁴ dans lesquels p est un nombre entier allant de 2 à 12 et R⁴ est un radical alkyle ayant de 1 à 20 atomes de carbone ou bien un groupe cycloalkyle mono- ou polycyclique ayant de 4 à 10 atomes de carbone, chaque cycle dudit groupe comprenant de 4 à 6 chaînons, et les groupes 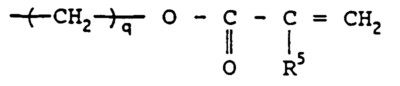 dans lesquels q est un nombre entier allant de 2 à 12 et R⁵ est choisi parmi l'atome d'hydrogène et le radical méthyle.

Un second objet de la présente invention consiste en un procédé de préparation des composés acryliques et méthacryliques de formule (I), comprenant la réaction d'un époxyde ou épisulfure acrylique ou méthacrylique de formule : 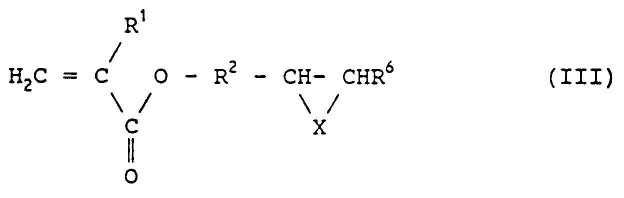 dans laquelle R¹, R², R⁶ et X ont les mêmes significations que dans la formule (I) avec un composé thiophosphoré de formule : 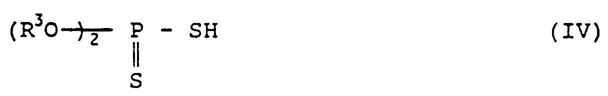 dans laquelle R³ a la même signification que dans la formule (I).

Comme exemples d'époxydes ou épisulfures de formule (III) on peut citer notamment :
- l'acrylate et le méthacrylate de glycidyle,
- l'acrylate et le méthacrylate de thioglycidyle (connus par le brevet US-A-3 404 158),
- les (méth)acrylates époxydés choisis parmi le 2-époxyéthylbicyclo [2,2,1] hept-5 (6)-yl (méth) acrylate, l'acrylate d'époxydicylopentyloxyéthyle ainsi que ceux de formule : 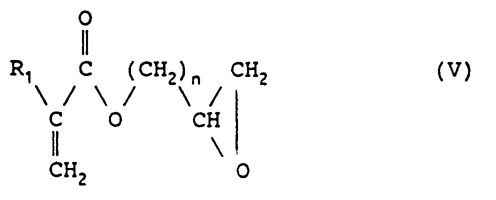 dans laquelle R₁ est choisi parmi l'atome d'hydrogène et le radical méthyle, et n est un nombre entier allant de 1 à 16, ceux de formule : 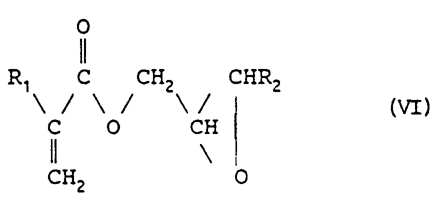 dans laquelle R₁ est choisi parmi l'atome d'hydrogène et le radical méthyle, et R₂ est choisi parmi les radicaux alkyle ayant de 1 à 12 atomes de carbone et les radicaux aryle ayant de 6 à 12 atomes de carbone, et ceux de formules : 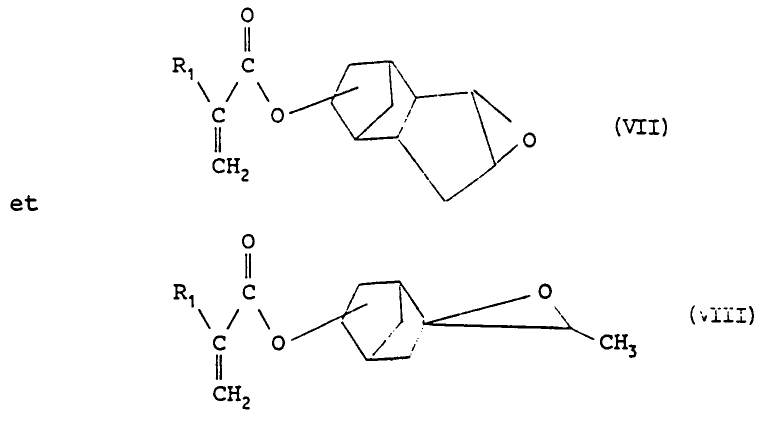 dans lesquelles R₁ est choisi parmi l'atome d'hydrogène et le radical méthyle.

Comme exemples de composés thiophosphorés de formule (IV) on peut citer notamment :
- ceux dans lesquels R³ est un radical alkyle ayant de 1 à 20 atomes de carbone, qui sont bien connus de l'homme de l'art.
- ceux dans lesquels R³ est un groupe (CH₂)ₚSR⁴, p étant un nombre entier de 2 à 12 et R⁴ étant un radical alkyle ayant de 1 à 20 atomes de carbone ou bien un radical cycloalkyle mono- ou polycyclique ayant de 4 à 10 atomes de carbone, chaque cycle dudit groupe comprenant de 4 à 6 chaînons. Inconnus jusqu'à présent, ils peuvent être préparés par réaction d'un alcool soufré de formule R⁴S(CH₂)ₚOH avec le pentasulfure de phosphore selon la réaction : 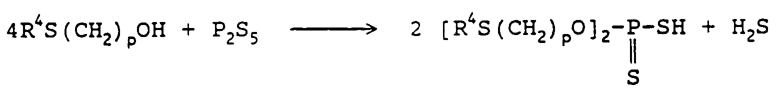 Cette réaction, qui peut être effectuée en présence d'un solvant tel que benzène, toluène, ou chloroforme, est mise en oeuvre de préférence à une température de 60°C à 110°C environ, sans dépasser la température de reflux lorsqu'un solvant est utilisé, et pendant une durée de 30 minutes à 2 heures environ.
- ceux dans lesquels R³ est un groupe 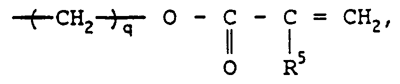 q étant un nombre entier allant de 2 à 12 et R⁵ étant choisi parmi l'atome d'hydrogène et le radical méthyle. Inconnus jusqu'à présent, leur préparation s'effectue en faisant réagir un composé acrylique ou méthacrylique de formule : 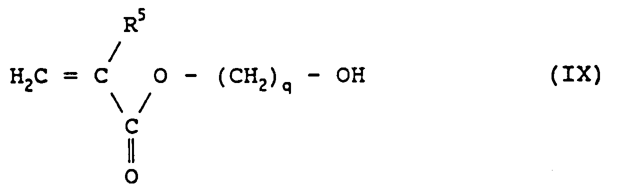 avec le pentasulfure de phosphore P₂S₅. Cette réaction est de préférence effectuée en présence d'un solvant tel que benzène, toluène, xylènes, chloroforme. La réaction est effectuée de préférence à une température comprise entre 40°C environ et la température de reflux du solvant. La durée de la réaction, variable selon la nature du composé de formule (IX), est généralement comprise entre 15 minutes et 5 heures environ. Pour la mise en oeuvre de la réaction on utilise généralement une proportion de 0,2 à 0,3 mole environ de pentasulfure de phosphore par mole de composé de formule (IX). A l'issue de la réaction, le composé thiophosphoré acrylique ou méthacrylique de formule (IV) est isolé par traitement au moyen d'une solution alcaline (soude par ex.), lavage à l'aide d'un solvant organique et régénération par neutralisation au moyen d'un acide minéral (HCl, H₂SO₄) dilué.

Quoique cela ne soit pas nécessaire, la réaction selon l'invention peut être mise en oeuvre en présence d'un solvant ou mélange de solvants tels que benzène et toluène. La réaction est effectuée de préférence à une température comprise entre -10°C et +25°C environ et en utilisant généralement une proportion de 0,8 à 1,2 mole environ de composé thiophosphoré pour 1 mole d'époxyde ou épisulfure acrylique ou méthacrylique de formule (III).

La réaction conduit le plus souvent à la formation d'un mélange de deux isomères de formules (I) et (II) dans lesquels la position de la fonction hydroxyle ou thiol varie selon le côté par lequel s'est effectuée l'ouverture du cycle oxiranne ou thiiranne. Quoiqu'elle dépende bien évidemment de la nature de R¹, R², X, R³ et R⁶, la proportion de l'isomère de formule (II) dans le mélange est toujours très minoritaire et généralement comprise entre 1% et 10% environ.

Enfin un troisième et dernier objet de la présente invention consiste en l'application des nouveaux composés acryliques et méthacryliques décrits précédemment à la constitution de nouveaux polymères et copolymères. Plus précisément la présente invention concerne des polymères et copolymères comprenant au moins un motif dérivé d'au moins un composé acrylique ou méthacrylique de formule (I), de formule (II) ou de formule (III). De tels (co)polymères peuvent en outre comprendre au moins un motif dérivé d'au moins un comonomère copolymérisable avec ledit composé acrylique ou méthacrylique de formule (I), de formule (II) ou de formule (III), tel que par exemple :
- un acrylate ou méthacrylate d'alkyle dont le groupe alkyle linéaire ou ramifié, le cas échéant substitué, par exemple par au moins un atome d'halogène comme le chlore ou le fluor et/ou par au moins un groupe hydroxyle, possède de 1 à 20 atomes de carbone,
- un acrylate ou méthacrylate d'aryle tel que le méthacrylate de benzyle,
- un hydrocarbure vinylaromatique tel que le styrène, le vinyltoluène, l'alphaméthylstyrène, le méthyl-4 styrène, le méthyl-3 styrène, le méthoxy-4 styrène, l'hydroxyméthyl-2 styrène, l'éthyl-4 styrène, l'éthoxy-4 styréne, le diméthyl-3,4 styrène, le chloro-2 styrène, le chloro-3 styrène, le chloro-4 méthyl-3 styrène, le tert.-butyl-3 styrène, le dichloro-2,4 styrène, le dichloro-2,6 styrène et le vinyl-1 naphtalène,
- un nitrile insaturé tel que l'acrylonitrile ou le méthacrylonitrile,
- une maléimide N-substituée telle que la N-éthylmaléimide, la N-isopropylmaléimide, la N-n-butylmaléimide, la N-isobutylmaléimide, la N-terbutylmaléimide, la N-n-octylmaléimide, la N-cyclohexylmaléimide, la N-benzylmaléimide et la N-phénylmaléimide,
- un anhydride d'acide dicarboxylique insaturé tel que l'anhydride maléique, l'anhydride itaconique, l'anhydride citraconique ou l'anhydride tétrahydrophtalique,
- l'acide acrylique ou méthacrylique,
- un acrylate ou méthacrylate de polyol comme les diacrylates et diméthacrylates de l'éthylèneglycol, du propylèneglycol, du 1,3-butanediol, du 1,4-butanediol, du 1,6-hexane-diol, du néopentylglycol, du 1,4-cyclohexane-diol, du 1,4-cyclohexanediméthanol, du 2,2,4-triméthyl-1,3-pentanediol, du 2-éthyl-2-méthyl-1,3-propanediol, du 2,2-diéthyl-1,3-propanediol, du diéthylèneglycol, du dipropylèneglycol, du triéthylèneglycol, du tripropylèneglycol, du tétraéthylèneglycol, du tétrapropylèneglycol, du triméthyloléthane, du triméthylolpropane, du glycérol, du pentaérythritol, les triacrylates et triméthacrylates du trimèthyloléthane, du triméthylolpropane, du glycérol, du pentaérythritol, les tétraacrylates et tétraméthacrylates du pentaérythritol, les di(méth)acrylates à hexa(méth)acrylates du dipentaérythritol, les poly(méth)acrylates de polyols mono- ou polyéthoxylés ou mono- ou polypropoxylés tels le triacrylate et le triméthacrylate du triméthylolpropane triéthoxylé, du triméthylolpropane tripropoxylé ; le triacrylate et le triméthacrylate du glycérol tripropoxylé ; le triacrylate, le triméthacrylate, le tétraacrylate et le tétraméthacrylate du pentaérythritol tétraéthoxylé,
- un acrylate ou méthacrylate époxydé choisi parmi le 2-époxyéthylbicyclo [2,2,1] hept-5 (6)-yl (méth) acrylate, l'acrylate d'époxydicylopentyloxyéthyle ainsi que ceux des formules (V), (VI), (VII) et (VIII) décrites ci-dessus,
- des oxazolidones choisies parmi celles de formule : 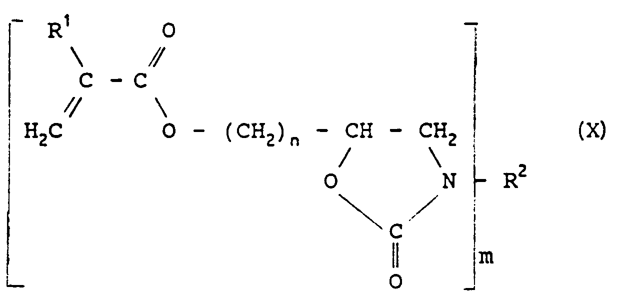 et celles de formule : 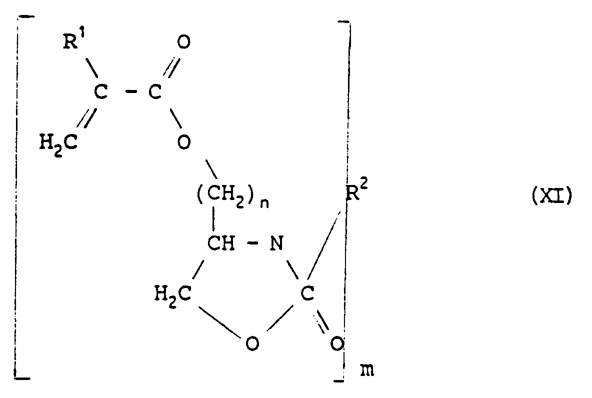 formules dans lesquelles :
   - R¹ est choisi parmi l'atome d'hydrogène et le radical méthyle,
   - n est un nombre entier allant de 1 à 12,
   - m est un nombre entier allant de 1 à 3,
   - R² est un radical hydrocarboné, alkyle linéaire, ramifié ou cyclique ou bien aromatique, possédant de 5 à 12 atones de carbone,
- des composés acryliques et méthacryliques choisis parmi ceux de formule : 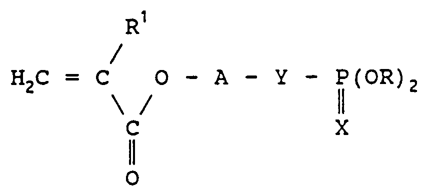
dans laquelle :
- R¹ est choisi parmi l'atome d'hydrogène et le radical méthyle,
- A est choisi parmi les radicaux (CH₂)ₙ pour lesquels n est un nombre entier de 2 à 12 et le radical -(CH₂CH₂O)_{d}-CH₂CH₂-, d étant un nombre entier allant de 1 à 20,
- X est choisi parmi les atomes de soufre et d'oxygène,
- Y est choisi parmi les atomes de soufre et d'oxygène, avec la condition que X est un atome de soufre et Y est un atome d'oxygène lorsque A est le radical -(CH₂CH₂O)_{d}-CH₂CH₂-, et
- R est choisi parmi les radicaux alkyle ayant de 1 à 20 atomes de carbone et les groupes -(CH₂)ₚSR³ dans lesquels p est un nombre entier allant de 3 à 12 et R³ est un radical alkyle ayant de 1 à 20 atomes de carbone,
ceux de formule : 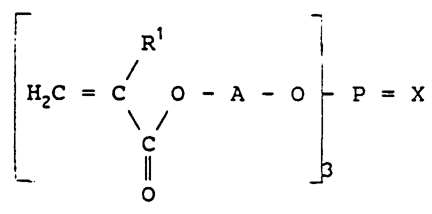 dans laquelle :
- R¹ est choisi parmi l'atome d'hydrogène et le radical méthyle,
- A est choisi parmi les radicaux (CH₂)ₙ pour lesquels n est un nombre entier de 2 à 12 et le radical - (CH₂CH₂O)_{d}-CH₂CH₂-, d étant un nombre entier allant de 1 à 20, et
- X est choisi parmi les atomes de soufre et d'oxygène,
et ceux de formule : 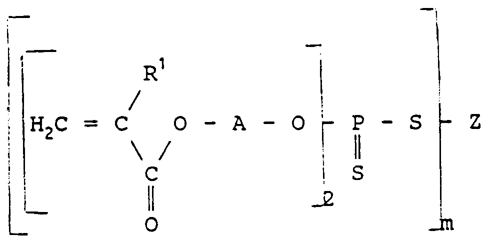 dans laquelle :
- R¹ est choisi parmi l'atome d'hydrogène et le radical méthyle,
- A est choisi parmi les radicaux (CH₂)ₙ pour lesquels n est un nombre entier de 2 à 12,
- m est un nombre entier allant de 1 à 3, et
- Z est choisi parmi l'atome d'hydrogène, les radicaux R²QH, R² étant un radical alkyle ayant de 2 à 12 atomes de carbone et Q étant choisi parmi les atomes d'oxygène et de soufre, et les atomes des métaux des groupes IA, IIA, IIIA, IB, IIB, VIB, VIIB et VIII de la Classification Périodique, avec la condition que Z est choisi parmi l'atome d'hydrogène et les radicaux R²OH lorsque m = 1 et que m est la valence de Z lorsque Z est un métal. De tels composés peuvent être préparés par réaction d'un composé acrylique ou méthacrylique de formule : 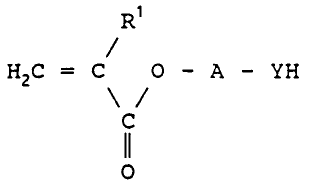
dans laquelle R¹, A et Y ont les mêmes significations que dans la formule (I), avec un composé pentavalent du phosphore, celui-ci pouvant être par exemple un composé de formule PXT₃ dans laquelle X a la même signification que dans la formule (II) et T désigne un atome d'halogène, ou bien un composé phosphoré de formule : 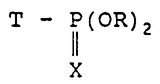 dans laquelle R et X ont les mêmes significations que dans la formule (I) et T désigne un atome d'halogéne, ou bien le pentasulfure P₂S₅.
- un acrylamide ou méthacrylamide, un acrylate ou méthacrylate de dialkylaminoalkyle et leurs sels quaternaires, et
- l'acrylate et le méthacrylate de (norbornyloxy-2)-2 éthyle et de (diméthanodécahydronaphtyloxy-2)-2 éthyle.

De tels polymères et copolymères sont obtenus en (co)polymérisant au moins un composé acrylique ou méthacrylique de formule (I) ou de formule (II) et le cas échéant au moins un comonomère copolymérisable, tel que défini précédemment, en présence d'au moins un initiateur de radicaux libres tel qu'un peroxyde, un hydroperoxyde ou un composé diazo. La (co)polymérisation est généralement effectuée à une température comprise entre 50°C et 120°C environ et en utilisant l'un des monomères comme solvant. Elle peut également s'effectuer en émulsion dans l'eau, à une température comprise entre 50°C environ et 100°C, en présence d'au moins un agent tensio-actif.

Les exemples suivants illustrent la présente invention sans intention limitative.

### EXEMPLES 1 à 4

Dans un réacteur muni d'un réfrigérant, d'un thermomètre, d'une ampoule à brome et équipé d'une agitation magnétique, on introduit sous courant d'azote 12 millimoles d'un alcool soufré de formule R⁴S(CH₂)ₚOH et 10 millilitres de benzène. On chauffe le mélange à reflux puis on introduit 6 millimoles de pentasulfure de phosphore par fractions et on poursuit le chauffage à reflux pendant 1 heure. Après retour à la température ambiante, le solvant est éliminé à l'aide d'un évaporateur rotatif. On recueille ainsi, avec un rendement supérieur à 95%, un liquide incolore qui est ensuite caractérisé par résonance magnétique nucléaire du proton au moyen d'un spectromètre JEOL PMX 60 Si. Tous les spectres obtenus comportent un déplacement chimique à 4,2 ppm (m, 4H). Ils comportent en outre, variables d'un produit à l'autre, des déplacements chimiques (exprimés en ppm) dont les caractéristiques sont mentionnées au Tableau I ci-après en fonction de la valeur de p et de la signification de R⁴. Les produits de réaction sont aussi caractérisés par résonance magnétique nucléaire (RMN) du phosphore 31 au moyen d'un spectromètre BRUCKER 80 MHz. Les spectres sont enregistrés avec découplage des protons, la référence étant l'acide phosphorique H₃PO₄. Les déplacements chimiques (exprimés en ppm) figurent dans le tableau I ci-après.

**TABLEAU I**

| Exemple | R⁴ | P | δ(SH) | δ(CH₂S) | δ(CH₂) | δ(CH₃) | RMN³¹P |
|---|---|---|---|---|---|---|---|
| 1 | C(CH₃)₃ | 3 | 3,4 s | 2,6(t,4H) | 2,0 (m,4H) | 1,3 (s,18H) | 85,9 |
| 2 | C(CH₃)₃ | 5 | 3,6 s | 2,6(t,4H) | 1,6 (m,8H) 1,5 (m,4H) | 1,3 (s,18H) | 85,6 |
| 3 | Cyclohexyl | 3 | 3,4 s | 2,7(m,6H) | 1,3 à 2,2 (m,24H) | | 85,5 |
| 4 | Cyclohexyl | 6 | 3,5 s | 2,6(m,6H) | 1,3 à 2,2 (m,36H) | | 85,3 |

Les acides dithiophosphoriques soufrés obtenus sont également caractérisés par résonance magnétique nucléaire du carbone 13 au moyen d'un spectromètre BRUCKER 80 MHz, par référence au tétraméthylsilane et avec découplage des protons mais sans découplage du phosphore. Les spectres obtenus comportent les déplacements chimiques (exprimés en ppm) indiqués au Tableau II ci-après.

**TABLEAU II**

| Exemple | δ(C-O) | δ(CH₂) | δ(C-S) | δ(C) | δ(CH₃) |
|---|---|---|---|---|---|
| 1 | 67,2 | 30,4 | 24,3 | 42,1 | 30,9 |
| | 66,9 | 30,0 | | | |
| | d;J(PC) | d;J(PC) | | | |
| | J=6,1Hz | J=8,5Hz | | | |
| 2 | 68,1 | 29,6 | 25,0 | 41,7 | 30,9 |
| | 67,8 | 29,2 | | | |
| | d:J(PC) | 27,9 | | | |
| | J=6,1Hz | | | | |

### EXEMPLES 5 à 7

Dans un réacteur muni d'un réfrigérant, d'un thermomètre, d'une ampoule à brome et équipé d'une agitation magnétique, on introduit sous courant d'azote 12 millimoles de méthacrylate hydroxylé de formule (IX) (avec R⁵ = radical méthyle) et 10 millilitres de benzène. On chauffe le mélange à reflux puis on introduit 6 millimoles de pentasulfure de phosphore par fractions. Le chauffage à reflux est poursuivi jusqu'à disparition totale du pentasulfure de phosphore. Après retour à la température ambiante, le solvant est éliminé à l'aide d'un évaporateur rotatif. On recueille ainsi, avec un rendement supérieur à 95%, un liquide incolore qui sera conservé à la température de 0°C jusqu'à toute utilisation ultérieure. Les acides dithiophosphoriques méthacryliques obtenus sont ensuite caractérisés par résonance magnétique nucléaire du proton au moyen d'un spectromètre JEOL PMX 60 SI. Tous les spectres obtenus comportent des déplacements chimiques à 6,1 ppm (m, 2H), 5,6 ppm (m, 2H), 4,3 ppm (m, 8H), 3,2 ppm (s) et 2,0 ppm (m, 6H). Ils comportent en outre, variable d'un produit à l'autre, un déplacement chimique (exprimé en ppm) dont les caractéristiques sont mentionnées au Tableau III ci-après en fonction de la valeur de p dans la formule (IX).

**TABLEAU III**

| Exemple | 5 | 6 | 7 |
|---|---|---|---|
| q | 2 | 3 | 6 |
| δ(CH₂) | | 2,1(m,4H) | 2,0(m,16H) |

### EXEMPLES 8 à 20

Dans un réacteur muni d'un réfrigérant, d'un thermomètre, d'une ampoule à brome et équipé d'une agitation magnétique, on introduit 10 millimoles d'un acide dithiophosphorique. Le réacteur est placé à 0°C puis on ajoute goutte à goutte 10 millimoles d'oxiranne ou de thiiranne (méth)acrylique. Après la fin de l'addition, l'agitation est poursuivie 30 minutes à 0°C puis 2 heures à 23°C. On recueille alors, avec un rendement supérieur à 95%, une huile incolore qui est caractérisée par :
- résonance magnétique nucléaire (RMN) du phosphore 31 selon la méthode décrite pour les exemples 1 à 4. On trouvera dans le Tableau IV ci-après le déplacement chimique (exprimé en ppm) relevé pour chaque spectre ;
- résonance magnétique nucléaire (RMN) du proton au moyen d'un spectromètre JEOL PMX 60 Si. Les spectres comportent les déplacements chimiques (exprimés en ppm) indiqués au Tableau IV ci-après.

L'oxiranne - respectivement le thiiranne - utilisé est l'acrylate de glycidyle (Exemples 8 et 9), le méthacrylate de glycidyle (Exemple 10 à 16) puis le méthacrylate de thioglycidyle (Exemples 17 à 20). L'acide dithiophosphorique utilisé répond à la formule (IV), R³ étant un radical alkyle ou aryle (Exemples 8, 10, 11, 12 et 17) ou bien un groupe (CH₂)ₚSR⁴, la valeur de p et la nature de R³ et R⁴ étant précisées dans le Tableau IV.

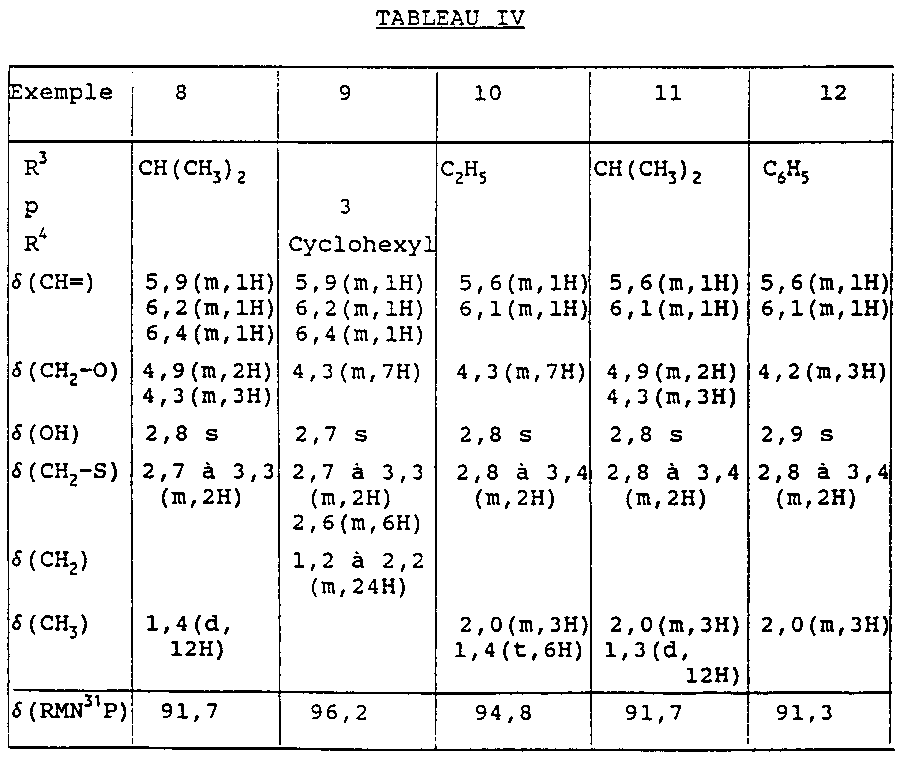

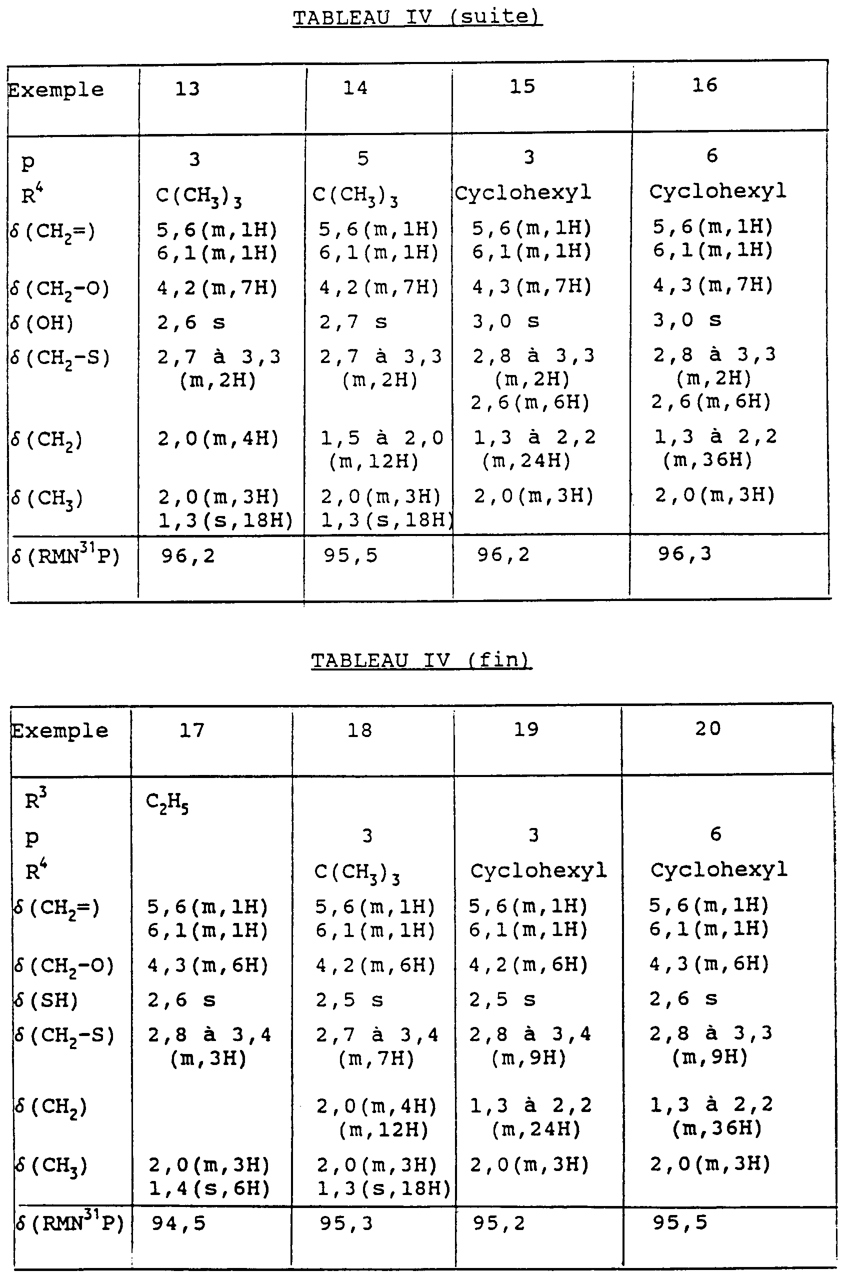

### EXEMPLE 21

En reproduisant le mode opératoire des Exemples 8 à 20, on fait réagir le méthacrylate de glycidyle avec l'acide dithiophosphorique de formule : 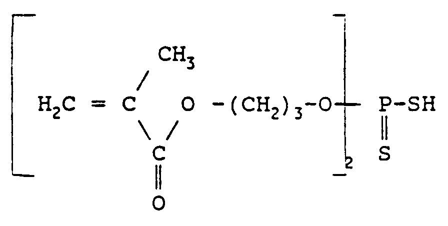 celui-ci étant obtenu par réaction à 80°C, pendant 30 minutes et dans 100 ml de benzène, entre 0,12 mole de méthacrylate de 3-hydroxypropyle et 0,03 mole de pentasulfure de phosphore.

La réaction conduit, avec un rendement supérieur à 95%, à la formation d'un liquide jaune clair dont l'analyse par résonance magnétique nucléaire révèle la présence d'un mélange des isomères.

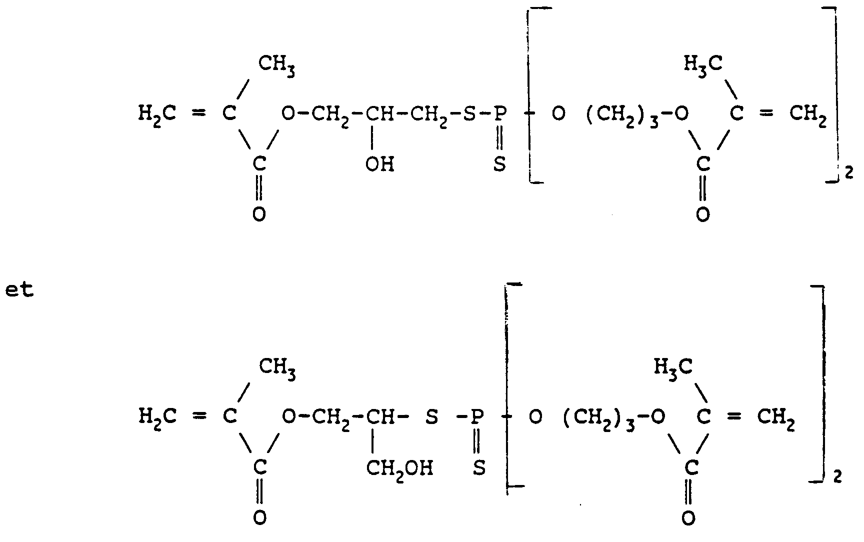

## Revendications

1. Composés acryliques et méthacryliques choisis parmi ceux de formule : 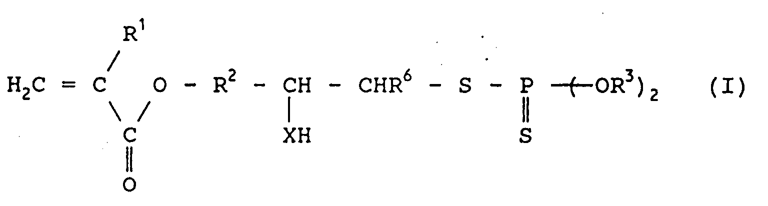 et ceux de formule : 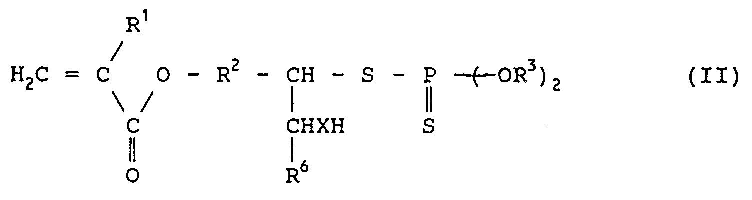 formules dans lesquelles :
- R¹ est choisi parmi l'atome d'hydrogène et le radical méthyle,
- X est un hétéroatome choisi parmi l'oxygène et le soufre,
- R² est choisi parmi les groupes alkylènes linéaires ou ramifiés, cycloalkylènes et hétérocycloalkylènes mono- ou polycycliques, alkylarylènes et arylalkylènes comprenant de 1 à 12 atomes de carbone,
- R⁶ est choisi parmi l'atome d'hydrogène et les radicaux alkyles et aryles ayant de 1 à 12 atomes de carbone, et
- R³ est choisi parmi les radicaux alkyles et aryles ayant de 1 à 20 atomes de carbone, les groupes -(CH₂)ₚSR⁴ dans lesquels p est un nombre entier allant de 2 à 12 et R⁴ est un radical alkyle ayant de 1 à 20 atomes de carbone ou bien un groupe cycloalkyle mono- ou polycyclique ayant de 4 à 10 atomes de carbone, chaque cycle dudit groupe comprenant de 4 à 6 chaînons, et les groupes 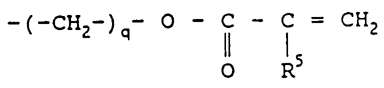 dans lesquels q est un nombre entier allant de 2 à 12 et R⁵ est choisi parmi l'atome d'hydrogène et le radical méthyle.

2. Procédé de préparation d'un composé selon la revendication 1, caractérisé en ce qu'il comprend la réaction d'un époxyde ou épisulfure acrylique ou méthacrylique de formule : 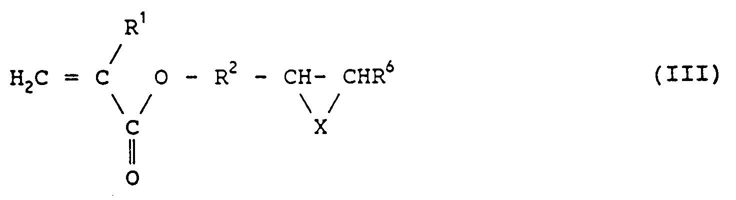 dans laquelle R¹, R², R⁶ et X ont les mêmes significations que dans la formule (I) avec un composé thiophosphoré de formule : 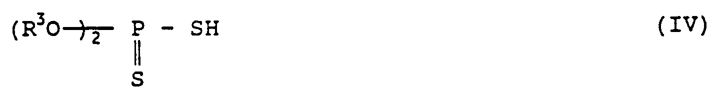 dans laquelle R³ a la même signification que dans la formule (I).

3. Procédé de préparation selon la revendication 2, caractérisé en ce que la réaction est effectuée à une température comprise entre -10°C et +25°C.

4. Procédé de préparation selon l'une des revendications 2 et 3, caractérisé en ce que la réaction est effectuée en utilisant une proportion de 0,8 à 1,2 mole de composé thiophosphoré pour 1 mole d'époxyde ou épisulfure acrylique ou mèthacrylique.

5. (Co)polymère comprenant au moins un motif dérivé d'au moins un composé selon la revendication 1.

6. Composés thiophosphorés de formule : 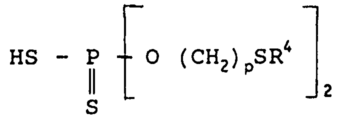 dans laquelle p est un nombre entier de 2 à 12 et R⁴ est un radical cycloalkyle mono- ou polycyclique ayant de 4 à 10 atomes de carbone, chaque cycle dudit groupe comprenant de 4 à 6 chaînons

7. Procédé de préparation d'un composé thiophosphoré selon la revendication 6, caractérisé en ce qu'il comprend la réaction d'un alcool soufré de formule R⁴S(CH₂)ₚOH, dans laquelle p est un nombre entier de 2 à 12 et R⁴ est un radical cycloalkyle mono- ou polycyclique ayant de 4 à 10 atomes de carbone, avec le pentasulfure de phosphore.

8. Procédé de préparation selon la revendication 7, caractérisé en ce que la réaction est effectuée à une température de 60°C à 110°C.

9. Procédé de préparation selon l'une des revendications 6 et 7, caractérisé en ce que la réaction est effectuée pendant une durée de 30 minutes à 2 heures.

## Claims

1. Acrylic and methacrylic compounds chosen from those of formula: 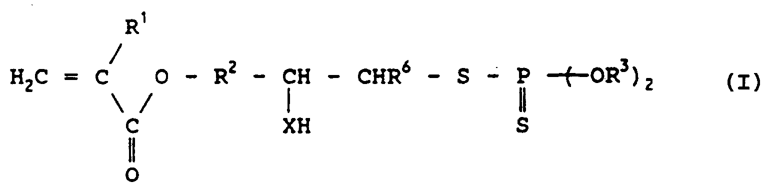 and those of formula: 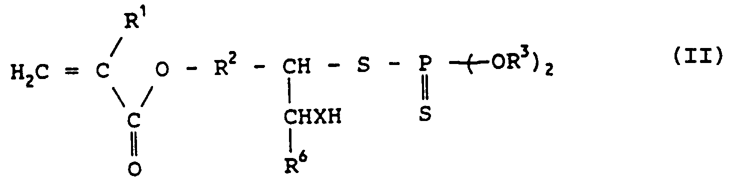 in which formulae:
- R¹ is chosen from a hydrogen atom and a methyl radical,
- X is a heteroatom chosen from oxygen and sulphur,
- R² is chosen from straight-chain or branched alkylene groups, mono- or polycyclic cycloalkylene and heterocycloalkylene groups and alkylarylene and arylalkylene groups comprising from 1 to 12 carbon atoms,
- R⁶ is chosen from a hydrogen atom and alkyl and aryl radicals having from 1 to 12 carbon atoms, and
- R³ is chosen from alkyl and aryl radicals having from 1 to 20 carbon atoms, -(CH₂)ₚSR⁴ groups in which p is an integer ranging from 2 to 12 and R⁴ is n alkyl radical having from 1 to 20 carbon atoms or alternatively a mono- or polycyclic cycloalkyl group having from 4 to 10 carbon atoms, each ring of the group comprising from 4 to 6 members, and 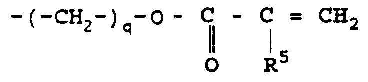 groups in which q is an integer ranging from 2 to 12 and R⁵ is chosen from a hydrogen atom and a methyl radical.

2. Process for preparing a compound according to Claim 1, characterized in that it comprises the reaction of an acrylic or methacrylic epoxide or episulphide of formula: 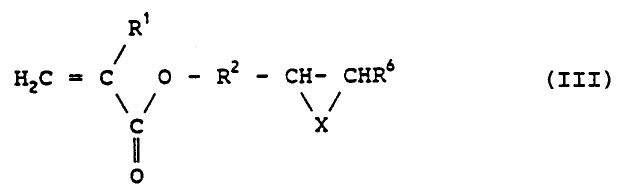 in which R¹, R², R⁶ and X have the same meanings as in formula (I), with a thiophosphorus compound of formula: 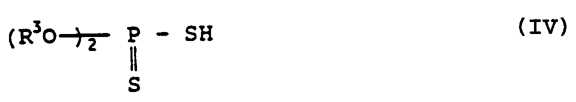 in which R³ has the same meaning as in formula (I).

3. Preparation process according to Claim 2, characterized in that the reaction is carried out at a temperature of between -10°C and +25°C.

4. Preparation process according to one of Claims 2 and 3, characterized in that the reaction is carried out using a proportion of 0.8 to 1.2 moles of thiophosphorus compound per 1 mole of acrylic or methacrylic epoxide or episulphide.

5. (Co)polymer comprising at least one unit derived from at least one compound according to Claim 1.

6. Thiophosphorus compounds of formula: 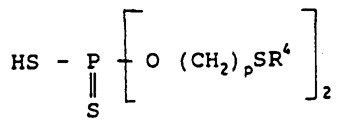 in which p is an integer from 2 to 12 and R⁴ is a mono-or polycyclic cycloalkyl radical having from 4 to 10 carbon atoms, each ring of the said group comprising from 4 to 6 members.

7. Process for preparing a thiophosphorus compound according to Claim 6, characterized in that it comprises the reaction of a sulphur-containing alcohol of formula R⁴S(CH₂)ₚOH, in which p is an integer from 2 to 12 and R⁴ is a mono- or polycyclic cycloalkyl radical having from 4 to 10 carbon atoms, with phosphorus pentasulphide.

8. Preparation process according to Claim 7, characterized in that the reaction is carried out at a temperature of 60°C to 110°C.

9. Preparation process according to one of Claims 6 and 7, characterized in that the reaction is carried out for a period of 30 minutes to 2 hours.

## Patentansprüche

1. Acrylverbindungen und Methacrylverbindungen, die ausgewählt sind unter Verbindungen der Formel 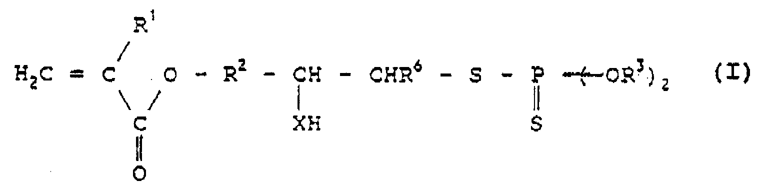 und der Formel 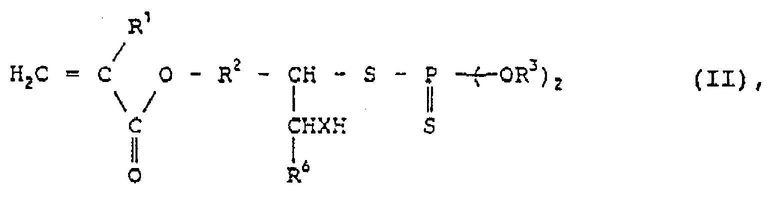 in denen:
- R¹ unter Wasserstoff und Methyl ausgewählt ist,
- X ein Heteroatom ist, das unter Sauerstoff und Schwefel ausgewählt ist,
- R² unter geradkettigen oder verzweigten Alkylengruppen, mono- oder polycyclischen Cycloalkylen- und Heterocycloalkylengruppen, Alkylarylen- und Arylalkylengruppen mit 1 bis 12 Kohlenstoffatomen ausgewählt ist,
- R⁶ unter Wasserstoff und Alkyl- und Arylgruppen mit 1 bis 12 Kohlenstoffatomen ausgewählt ist, und
- R³ ausgewählt ist unter Alkyl- und Arylgruppen mit 1 bis 20 Kohlenstoffatomen, Gruppen -(CH₂)ₚSR⁴, worin p eine ganze Zahl von 2 bis 12 ist und R⁴ ein Alkyl mit 1 bis 20 Kohlenstoffatomen oder eine mono- oder polycyclische Cycloalkylgruppe mit 4 bis 10 Kohlenstoffatomen darstellt, wobei jeder Ring dieser Gruppe 4 bis 6 Ringglieder umfaßt, und Gruppen 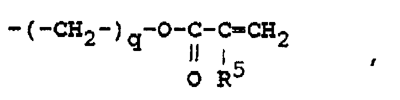 worin q eine ganze Zahl von 2 bis 12 ist und R⁵ unter Wasserstoff und Methyl ausgewählt ist.

2. Verfahren zur Herstellung einer Verbindung nach Anspruch 1, gekennzeichnet durch Umsetzung eines Acrylepoxids, Acrylepisulfids, Methacrylepoxids oder Methacrylepisulfids der Formel 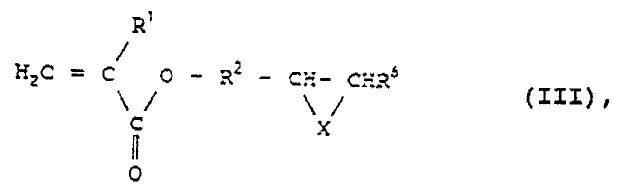 in der R¹, R², R⁶ und X dasselbe wie in Formel (I) bedeuten, mit einer Thiophosphorverbindung der Formel 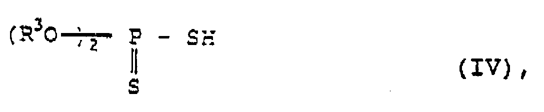 in der R³ dasselbe wie in Formel (I) bedeutet.

3. Verfahren nach Anspruch 2, dadurch gekennzeichnet, daß die Umsetzung bei einer Temperatur von -10 bis +25 °C durchgeführt wird.

4. Verfahren nach Anspruch 2 oder 3, dadurch gekennzeichnet, daß die Umsetzung unter Anwendung eines Mengenverhältnisses von 0,8 bis 1,2 mol Thiophosphorverbindung pro Mol Acrylepoxid, Acrylepisulfid, Methacrylepoxid oder Methacrylepisulfid durchgeführt wird.

5. (Co)polymer, das eine oder mehrere wiederkehrende Einheiten enthält, die von einer oder mehreren Verbindungen nach Anspruch 1 abgeleitet sind.

6. Thiophosphorverbindungen der Formel 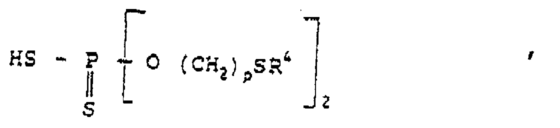 in der p eine ganze Zahl von 2 bis 12 ist und R⁴ eine mono- oder polycyclische Cycloalkylgruppe mit 4 bis 10 Kohlenstoffatomen darstellt, wobei jeder Ring dieser Gruppe 4 bis 6 Ringglieder aufweist.

7. Verfahren zur Herstellung einer Thiophosphorverbindung nach Anspruch 6, gekennzeichnet durch Umsetzung eines schwefelhaltigen Alkohols der Formel R⁴S(CH₂)ₚOH, in der p eine ganze Zahl von 2 bis 12 ist und R⁴ eine mono- oder polycyclische Cycloalkylgruppe mit 4 bis 10 Kohlenstoffatomen darstellt, mit Phosphorpentasulfid.

8. Verfahren nach Anspruch 7, dadurch gekennzeichnet, daß die Umsetzung bei einer Temperatur von 60 bis 110 °C durchgeführt wird.

9. Verfahren nach Anspruch 6 oder 7, dadurch gekennzeichnet, daß die Umsetzung während einer Dauer von 30 min bis 2 h durchgeführt wird.
